# DEMANDE DE BREVET EUROPEEN

(11) **EP 2 065 296 A1**
(43) Date de publication de la demande: **03.06.2009**
(21) Numéro de dépôt: 08364005.2
(22) Date de dépôt: 25.11.2008
(51) Int. Cl.: B62K 21/26

(54) **Guidon réglable**

(30) Priorité: 28.11.2007 FR 0708308
(71) Demandeur: Gueguen, Patrick, 35830 Betton (FR)
(72) Inventeur: Gueguen, Patrick, 35830 Betton (FR)

(57) **Abrégé**

L'invention concerne un guidon réglable dans les 3 axes permettant de conduire un véhicule.

Le guidon réglable est caractérisé en ce qu'il est constitué d'une structure rigide en forme de U aplati (1), pourvue sur chaque extrémité du U d'une bride à fente (2) assurant la liaison avec chacune des poignées coudées (3) permettant un réglage individuel des poignées dans les trois axes .L'ensemble se verrouille dans la position voulue à l'aide de la vis (4)

Le dispositif selon l'invention est particulièrement destiné à la conduite d'un véhicule équipé d'un guidon.

## Description

La présente invention concerne un guidon réglable pour tous les véhicules muni d'un guidon (moto, vélo ,quad, scooter des neiges, scooter des mers, trikes, side-car etc...)

la direction d'un véhicule est traditionnellement effectuer à l'aide d'un guidon sans possibilité de réglage

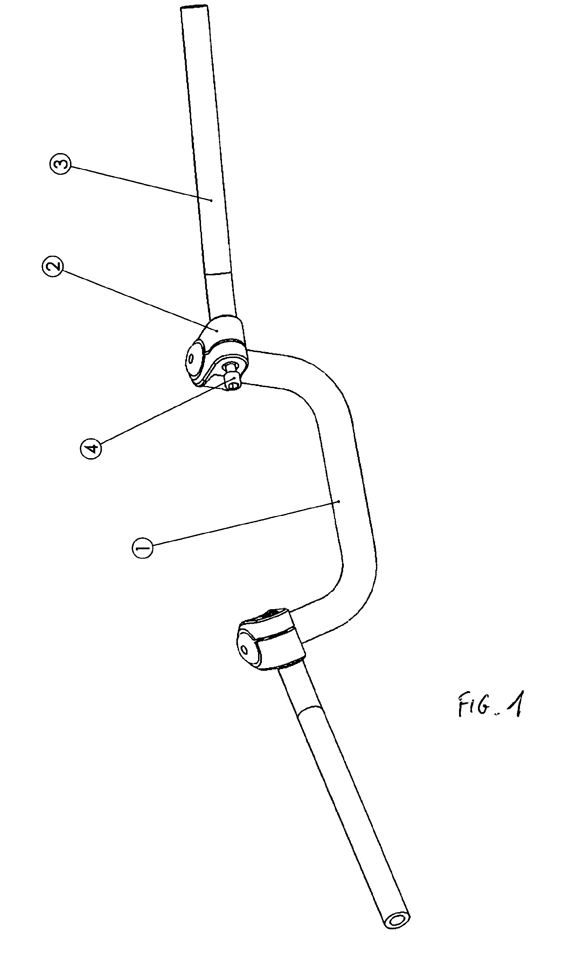

Le dispositif selon l'invention permet de remédier à cet inconvénient. Il permet de régler le guidon dans les trois dimensions et de bloquer celui ci dans la position désirée en fonction de l'ergonomie et de la taille de chaque personne. Il comporte en effet selon une première caractéristique une partie centrale en forme de U aplatie et deux demi-guidons ainsi que deux vis pour immobiliser les deux demi-guidons dans la position requise
Les dessins annexés illustrent l'invention
La figure 1 représente le dispositif de l'invention

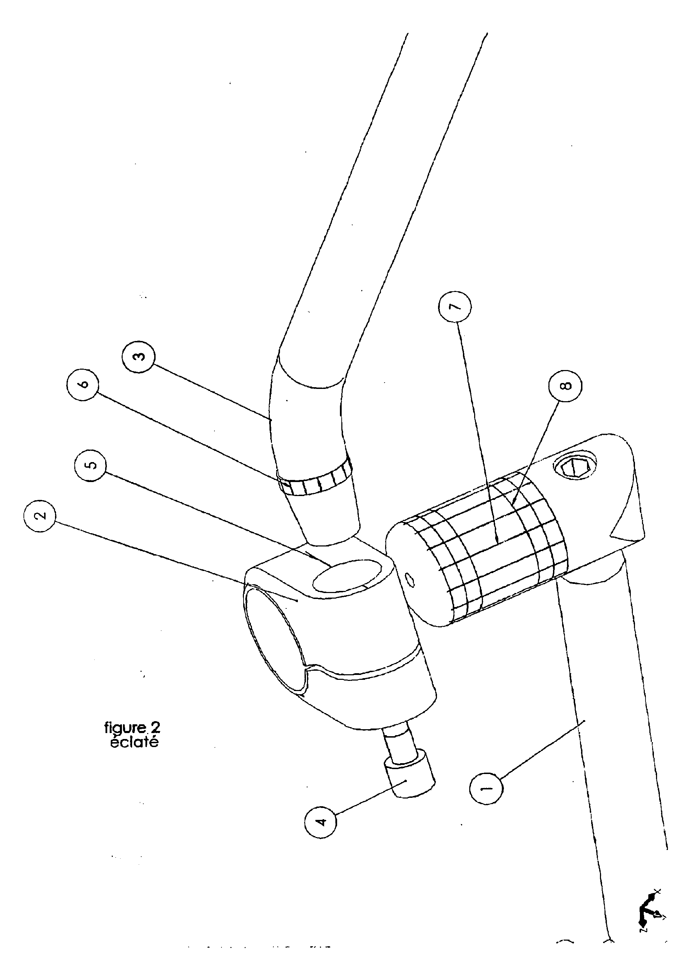

La figure 2 représente en éclaté une partie de cette invention

En référence à ces dessins, le guidon comporte une partie centrale en forme de U aplati (1),deux brides à fente (2) ,deux poignées (3) et deux vis de blocage (4). Les deux extrémités du U sont pourvues de stries de réglage verticales (7) et horizontales (8). La poignée (3) dispose de stries de réglage (6). La bride (2) est pourvue d'un repère de réglage (5).Le bout des poignées est obturé par des embouts filetés (9).

Les poignées (3) sont coniques pour pouvoir s'emboîter dans le trou conique des brides à fente (2) ainsi les vis (4) dans l'axe des poignées permettent à elles seule le blocage de toutes les pièces sur la partie centrale en forme de U aplati.

La poignée (3) dispose de repères (6) à la base de sa partie conique que l'on met en coïncidence avec le repère (5) de la bride (2).

La partie centrale du guidon en forme de U aplati (1) est pourvu de stries de réglage verticales et horizontales à ses deux extrémités. Il suffi de mettre en coïncidence la fente de la bride (2) avec un des repères (7) et la partie supérieure ou inférieure de la bride avec un des repères (8) cela permet de régler les deux poignées de façon symétrique. L'ensemble est bloqué avec les vis (4).

La poignée (3) est taraudée à sa partie externe pour recevoir un embout fileté (9) pour obturer le bout du guidon pour qu'il ne devienne pas contendant.

En particulier le guidon réglable est constitué d'une structure rigide en forme de U aplati (1), pourvue sur chaque extrémité du U d'une bride à fente (2) assurant la liaison avec chacune des poignées coudées (3) permettant de réaliser un réglage individuel des poignées dans les trois dimensions de l'espace.

. Dans un mode de réalisation préféré le guidon réglable comporte une vis unique (4) dans l'axe de l'extrémité de la poignée (3) et opposée à celle-ci permet le serrage de la bride. (2) et le blocage de la poignée (3)

On peut aussi prévoir que la poignée coudée (3) soit conique en son extrémité pour assurer un positionnement rigoureux dans un trou conique correspondant de la bride (2).

On peut aussi prévoir que la poignée (3) est coudée au plus près de la partie conique pour permettre de régler l'inclinaison de la poignée.

Il est particulièrement souhaitable que les extrémités de la structure rigide en forme de U aplati (1) soit pourvues de stries verticales de réglage (7) régulièrement réparties permettant le positionnement angulaire de la bride (2) En faisant correspondre une de ces stries (7) à la fente de la bride, les deux poignées (3) pourront être réglées de façon symétrique.

Il est particulièrement souhaitable que les extrémités de la structure rigide en .forme de U aplati (1) soit pourvues de stries horizontales de réglage (8) régulièrement réparties permettant le positionnement verticale et précis de la bride (2). En faisant correspondre une de ces stries (8) à la surface supérieure ou inférieur de la bride (2) les 10 deux poignées (3) pourront être réglées de façon identique.

Dans un mode de réalisation préféré l'extrémité conique de la poignée (3) est pourvue de stries de réglage (6) régulièrement réparties et le trou conique de la bride (2) d'un repère (5) permettant le positionnement en rotation des poignées (3). En faisant correspondre une de ces stries (6) au repère (5) les deux poignées (3) pourront être réglées de façon symétrique.

On peut aussi prévoir que le diamètre de la section de la base de la structure en forme de U aplati (d) et le diamètre des sections des extrémités (D) du U satisfont l'inégalité suivante 0,6D<d<0,8D.

Le dispositif selon invention est particulièrement destiné à la commande de direction de tous les véhicules muni d'un guidon.

## Revendications

1. Guidon réglable constitué d'une structure rigide en forme de U aplati (1), pourvue sur chaque extrémité du U d'une bride à fente (2) assurant la liaison avec chacune des poignées coudées (3) permettant de réaliser un réglage individuel des poignées dans les trois dimensions de l'espace , **caractérisé en ce qu'**une vis unique (4) dans l'axe de l'extrémité de la poignée (3) et opposée à celle-ci permet le serrage de la bride (2) et le blocage de la poignée (3).

2. Guidon réglable selon la revendication 1 **caractérisé en ce que** la poignée coudée (3) est conique en son extrémité pour assurer un positionnement rigoureux dans un trou conique correspondant de la bride (2).

3. Guidon réglable selon la revendication 3 **caractérisé en ce que** la poignée (3) est coudée au plus près de la partie conique pour permettre de régler l'inclinaison de la poignée.

4. Guidon réglable selon la revendication 1 **caractérisé en ce que** les extrémités de la structure rigide en forme de U aplati (1) sont pourvues de stries verticales de réglage (7) régulièrement réparties permettant le positionnement angulaire de la bride (2) ,en faisant correspondre une de ces stries (7) à la fente de la bride (2) les deux poignées (3) pourront être réglées de façon symétrique.

5. Guidon réglable selon la revendication 1 **caractérisé en ce que** les extrémités de la structure rigide en forme de U aplati (1) sont pourvues de stries horizontales de réglage (8) régulièrement réparties permettant le positionnement verticale et précis de la bride (2) ,en faisant correspondre une de ces stries (8) à la surface supérieure ou inférieur de la bride (2) les deux poignées (3) pourront être réglées de façon identique.

6. Guidon réglable selon la revendication 2 **caractérisé en ce que** l'extrémité conique de la poignée (3) est pourvue de stries de réglage (6) régulièrement réparties et le trou conique de la bride (2) d'un repère (5) permettant le positionnement en rotation des poignées (3), en faisant correspondre une de ces stries (6) au repère (5) les deux poignées (3) pourront être réglées de façon symétrique.

7. Guidon réglable selon les revendications de 1 à 6 **caractérisé en ce que** le diamètre de la section de la base de la structure en forme de U aplati (d) et le diamètre des sections des extrémités (D) du U satisfont l'inégalité suivante 0,6D<d<0,8D.
